# EUROPÄISCHE PATENTANMELDUNG

(11) **EP 2 423 464 A1**
(43) Veröffentlichungstag der Anmeldung: **29.02.2012**
(21) Anmeldenummer: 10174370.6
(22) Anmeldetag: 27.08.2010
(51) Int. Cl.: F01K 13/02, F01D 21/00, H02P 9/10, H02P 9/04

(54) **Verfahren zum Regeln eines Turbosatzes**

(71) Anmelder: Siemens Aktiengesellschaft, 80333 München (DE)
(72) Erfinder: Bennauer, Martin, 46242, Bottrop (DE); Werthes, Heribert, 45357, Essen (DE)

(57) **Zusammenfassung**

Das erfindungsgemäße Verfahren zum Regeln eines Turbosatzes mit einer Turbine (3) und einem Generator (2) umfasst die Schritte: Bereitstellen eines ersten Signals (S1), welches eine Verminderung der Ist-Leistung (PEL, 4) des Generators (2) anzeigt; Erzeugen eines zweiten Signals (KU, 10), welches eine Kurzschlussunterbrechung anzeigt, in Abhängigkeit des ersten Signals (S1); Zurücksetzten des zweiten Signals (KU, 10) nach einer vorbestimmten ersten Zeitspanne (TKU) und Blockieren des zweiten Signals (KU, 10) während einer vorbestimmten zweiten Zeitspanne (TSPKU); Bremsen und anschließendes Beschleunigen der Turbine(3) in Abhängigkeit des zweiten Signals (KU, 10); Erzeugen eines dritten Signals (LAW, 8), welches einen Lastabwurf des Turbosatzes anzeigt nach einer vorbestimmten dritten Zeitspanne (TLAW) in Abhängigkeit des ersten Signals (S1), wenn das erste Signal (S1) durch ein Absinken der Ist-Leistung (PEL, 4) des Generators (2) auf einen vorbestimmten negativen Wert (GPNEG) bereitgestellt wird sowie die Ist-Leistung (PEL, 4) des Generators (2) kleiner als das Zweifache des Eigenbedarfs (GP2EB) geworden ist sowie die Differenz zwischen einer Soll-Leistung (PSW, 5) und der Ist-Leistung (PEL, 4) des Generators (2) größer als das Zweifache des Eigenbedarfs (GP2EB) des Turbosatzes geworden ist; sowie Lastabwurf auf den Eigenbedarf des Turbosatzes in Abhängigkeit des dritten Signals (LAW, 8) .

## Beschreibung

Die Erfindung betrifft ein Verfahren zum Regeln eines Turbosatzes.

Turbosätze, die insbesondere in Dampfkraftwerken zur Anwendung kommen, arbeiten bereits im normalen Betrieb mit hohen Drehzahlen. Diese Drehzahlen können in einem Störfall ansteigen und dadurch im ungünstigsten Fall eine Zerstörung des Turbosatzes nach sich ziehen. Die Regelungsstrategien des Turbosatzes müssen daher höchsten Ansprüchen genügen. Insbesondere bei Netzstörfällen und schnellen Laständerungen sind diese Regelungsstrategien von besonderer Bedeutung. Weicht beispielsweise die Drehzahl eines zum Turbosatz zugehörigen Generators stark vom Nennwert ab und eine zugehörige Welle gerät in Gefahr zu Schlüpfen, muss der gesamte Turbosatz gezielt vom zugehörigen Netz abgekoppelt und auf Eigenbedarf abgefahren werden, einem sog. Lastabwurf auf Eigenbedarf. Nach einem solchen Lastabwurf reduziert sich die Leistung an den Klemmen des Generators in kurzer Zeit auf sehr geringe Werte. Damit die zugehörige Welle durch eine solche Verminderung der Ist-Leistung des Generators nicht zu stark beschleunigt wird, müssen die Ventile der Turbine schnell zugefahren werden. Nach einem Lastabwurf bleibt die elektrische Leistung an den Klemmen des Generators im Allgemeinen längere Zeit auf einem niedrigen Wert.

Der im Folgenden "Kurzschlussunterbrechung" genannte Störfall ist hingegen ein in der Regel 3-poliger Netzkurzschluss in der Nähe des Kraftwerks, welcher nur wenige 100 ms andauert. Die Leistung an den Klemmen des Generators ist bei einem solchen Netzstörfall aufgrund des genannten Spannungseinbruchs kurzzeitig gleich Null. Sofern der Kurzschluss innerhalb einer Fehlerklärungszeit von mindestens 150 ms gelöscht werden kann, soll der Generator weiterhin Wirk- und Blindleistung ins Netz einspeisen. Wenn der Kurzschluss also 150 ms oder kürzer anliegt, darf weder die Welle durchschlüpfen noch die Turbine heruntergefahren werden. In vielen Dampfkraftwerken ist die mögliche Fehlerklärungszeit noch deutlich kürzer.

Die Regelung eines Turbosatzes muss auf beide Störfälle reagieren, wobei das Problem besteht, dass der Lastabwurf und die Kurzschlussunterbrechung zum jeweiligen Beginn nicht zu unterscheiden sind, da in beiden Fällen die Leistung an den Klemmen des Generators abfällt. Insbesondere beim Auftreten zweier Kurzschlussunterbrechungen innerhalb weniger Sekunden, einem sog. Doppelfehler, kann auf die Kurzschlussunterbrechung ein Lastabwurf auf Eigenbedarf folgen. Ein Abwurf der elektrischen Last in kurzer Folge auf eine Kurzschlussunterbrechung wiederum kann zu sehr hohen Überdrehzahlen führen, welche ein Ansprechen eines zugehörigen Schutzes und somit ein Abfahren des Turbosatzes zur Folge haben. Das Anfahren des Turbosatzes aus dem Stillstand beansprucht dann im Extremfall bis zu mehrere Tage.

Der Erfindung liegt die Aufgabe zugrunde, ein Verfahren zum Regeln eines Turbosatzes zu schaffen, bei dem die oben genannten Probleme weitestgehend vermieden sind und insbesondere die Drehzahl des Turbosatzes einen vorgegebenen maximalen Wert nicht überschreitet.

Die Aufgabe ist erfindungsgemäß mit einem Verfahren zum Regeln eines Turbosatzes gemäß Anspruch 1 gelöst. Ferner ist die Aufgabe mit einer Vorrichtung zum Regeln eines Turbosatzes gemäß Anspruch 7 gelöst. Vorteilhafte Weiterbildungen der Erfindung sind in den abhängigen Ansprüchen beschrieben.

Das erfindungsgemäße Verfahren zum Regeln eines Turbosatzes umfasst die Schritte: Bereitstellen eines ersten Signals S1, welches eine Verminderung der Ist-Leistung PEL des Generators anzeigt; Erzeugen eines zweiten Signals KU, welches eine Kurzschlussunterbrechung anzeigt, in Abhängigkeit des ersten Signals S1; Zurücksetzten des zweiten Signals KU nach einer vorbestimmten ersten Zeitspanne TKU und Blockieren des zweiten Signals während einer vorbestimmten zweiten Zeitspanne TSPKU; Bremsen und anschließendes Beschleunigen der Turbine in Abhängigkeit des zweiten Signals KU; Erzeugen eines dritten Signals LAW, welches einen Lastabwurf des Turbosatzes anzeigt nach einer vorbestimmten dritten Zeitspanne TLAW in Abhängigkeit des ersten Signals S1, wenn das erste Signal S1 durch ein Absinken der Ist-Leistung PEL des Generators auf einen vorbestimmten negativen Wert GPNEG bereitgestellt wird sowie die Ist-Leistung PEL des Generators kleiner als das Zweifache des Eigenbedarfs GP2EB geworden ist sowie die Differenz zwischen einer Soll-Leistung PSW und der Ist-Leistung PEL des Generators größer als das Zweifache des Eigenbedarfs GP2EB des Turbosatzes geworden ist; sowie Lastabwurf auf den Eigenbedarf des Turbosatzes in Abhängigkeit des dritten Signals LAW.

Zur Erkennung einer Kurzschlussunterbrechung wird erfindungsgemäß das gekoppelte Signal aus sprunghafter Verminderung der Ist-Leistung des Generators um einen vorbestimmten Wert und einer logischen UND-Verknüpfung verwendet. Die logische UND-Verknüpfung umfasst die Signale aus einem Absinken der Ist-Leistung des Generators auf einen vorbestimmten negativen Wert sowie einem Kleinerwerden der Ist-Leistung des Generators als das Zweifache des Eigenbedarfs sowie einem Größerwerden der Differenz zwischen einer Soll-Leistung und der Ist-Leistung des Generators um mehr als das Zweifache des Eigenbedarfs. Da ein Lastabwurf auf den Eigenbedarf des Turbosatzes jedoch nur in Folge eines Leistungseinbruchs unterhalb des zweifachen Eigenbedarfs erfolgen soll, wird erfindungsgemäß das Signal der logischen UND-Verknüpfung direkt auf ein Zeitmessglied für die dritte Zeitspanne geschaltet. Durch diese erfindungsgemäße Schaltlogik sind bei dem erfindungsgemäßen Verfahren zum Regeln des Turbosatzes keine Filterschaltungen zwischen der logischen UND-Verknüpfung und dem Zeitmessglied zwischengeschaltet, wodurch die dritte Zeitspanne gering gehalten werden kann. Zeitverzögerungen durch Filterschaltungen, etwa in Folge zu großer Filterzeiten nach einer Kurzschlussunterbrechung werden also vorteilhaft vermieden.

Bei der erfindungsgemäßen Lösung wird bei beiden genannten Störfällen, also sowohl bei der Kurzschlussunterbrechung als auch beim Lastabwurf, ein Signal erzeugt, welches zunächst zu einem Abbremsen der Turbine führt. Dieses Signal ist im Wortlaut des Anspruchs 1 das zweite Signal, welches in Abhängigkeit und insbesondere zeitgleich mit einem ersten Signal generiert wird, welches eine Verminderung der Ist-Leistung des Generators anzeigt. Mit anderen Worten wird die Turbine des erfindungsgemäßen Turbosatzes gebremst, indem ihre Leistung reduziert wird, was in der Regel durch einen Ventilschnellgang erfolgt, sobald ein zugehöriges Signal eine nennenswerte Verminderung der Ist-Leistung des Generators anzeigt. Bei dem erfindungsgemäßen Verfahren wird ferner im Anschluss an dieses Abbremsen der Turbine diese wieder beschleunigt. Während dieses Abbremsens und Beschleunigens wird mit dem erfindungsgemäßen Regler des Turbosatzes abgeprüft, ob weitere Kriterien für den Lastabwurf vorliegen. Sofern der Lastabwurf erkannt wird und das zugehörige dritte Signal erzeugt wird, wird erst dann ein dauerhaftes Stoppen der Turbine in Abhängigkeit des dritten Signals ausgelöst. Bei dem erfindungsgemäßen Verfahren wird sowohl bei einer Kurzschlussunterbrechung als auch einem Lastabwurf die Turbine zunächst grundsätzlich abgebremst und erst im weiteren Zeitverlauf geprüft, ob zwischen Kurzschlussunterbrechung und Lastabwurf unterschieden werden kann. Während dieses Zeitverlaufs wird die Turbine vorsorglich wieder in einen Startmodus versetzt, damit sie durchstarten kann, sobald die Kurzschlussunterbrechung erkannt und die Lastabwurf-Situation eben nicht erkannt worden ist.

Ferner wird bei dem erfindungsgemäßen Verfahren das zweite Signal, welches eine Kurzschlussunterbrechung anzeigt, zurückgesetzt und anschließend blockiert. Dadurch wird sichergestellt, dass dieses zweite Signal eine Kurzschlussunterbrechung nicht erneut anzeigen kann, insbesondere wenn im nachfolgenden Zeitverlauf die Generatorwirkleistung um den Nullpunkt pendelt. Das erste Signal, welches eine Verminderung der Ist-Leistung des Generators anzeigt, wird generiert, wenn sich die Generatorleistung sprungförmig vermindert, wobei diese sprungförmige Verminderung insbesondere mindestens 70 % beträgt. Zur Überprüfung auf Leistungssprünge wird bevorzugt das Leistungssignal zunächst durch ein DT1-Glied gefiltert. Mit dieser Bedingung ist in Form einer ODER-Verknüpfung die oben erläuterte UND-Verknüpfung gekoppelt. Das Eintreten einer der beiden Ereignisse erzeugt das zweite Signal, wodurch immer ein kurzzeitiges Abbremsen der zugehörigen Turbine ausgelöst wird.

Wichtig ist, dass zudem das vom .DT1-Glied ungefilterte Leistungssignal mit dem Zeitmessglied für die vorbestimmte dritte Zeitspanne direkt geschaltet ist, wenn das erste Signal durch ein Absinken der Ist-Leistung des Generators auf einen vorbestimmten negativen Wert bereitgestellt wird sowie die Ist-Leistung des Generators kleiner als das Zweifache des Eigenbedarfs geworden ist sowie die Differenz zwischen einer Soll-Leistung und der Ist-Leistung des Generators größer als das Zweifache des Eigenbedarfs geworden ist, also die Bedingungen der UND-Verknüpfung erfüllt sind. Steht ein Signal der UND-Verknüpfung für die Dauer der dritten Zeitspanne an dem Zeitmessglied an, wird das dritte Signal erzeugt, wodurch die Turbine dauerhaft auf den Eigenbedarf der Turbine abgebremst wird.

Bevorzugt beträgt die vorbestimmte erste Zeitspanne zwischen 100 ms und 200 ms, insbesondere 150 ms. Die vorbestimmte erste Zeitspanne dient dazu festzulegen, wie lange das zweite Signal gesetzt bleibt und damit eine Kurzschlussunterbrechung angezeigt ist. Diese zweite vorbestimmte Zeitspanne ist vorteilhaft so bemessen, dass die zugehörige Turbine gebremst bzw. deren Ventile schnell geschlossen werden können, also der Schnellgang ausgelöst werden kann. Zugleich ist diese vorbestimmte erste Zeitspanne so gewählt, dass die Turbine ausreichend schnell wieder in den Startmodus versetzt wird, um durch Einspeisen von Wirk- und Blindleistung mit dem Generator die Frequenz- und Spannungsstabilität im Netz zu stützen.

Die vorbestimmte zweite Zeitspanne beträgt bevorzugt zwischen 4 s und 10 s, insbesondere 7 s. Die vorbestimmte zweite Zeitspanne dient dazu das zweite Signal zu verblocken und zu verhindern, dass nach einem Erkennen einer Kurzschlussunterbrechung durch ein Pendeln der Generatorwirkleistung um den Nullpunkt die Kurzschlussunterbrechungserkennung mehrmals hintereinander anspricht. Die vorbestimmte zweite Zeitspanne ist dabei vorteilhaft derart gewählt, dass das mechanische Moment und folglich die elektrische Leistung des Generators schneller wieder zurückkommen als diese gewählte zweite Zeitspanne.

Die vorbestimmte dritte Zeitspanne beträgt bevorzugt zwischen 0,1 s und 0,7 s, insbesondere 0,3 s. Innerhalb dieser Zeitspanne wird der Schutz nicht durch die entstehenden Überdrehzahlen nach einem Lastabwurf aufgrund eines Netzkurzschlusses ausgelöst. Das Erzeugen des dritten Signals, welches den Lastabwurf anzeigt, erfolgt bevorzugt in Abhängigkeit eines Lastschalters für den Generator. Der Lastschalter des Generators gibt an, ob der Generator überhaupt elektrische Leistung ins Netz einspeisen soll. Allerdings wird ein solcher Lastschalter nicht bei jedem Lastabwurf sicher mitbetätigt, sodass aus diesem Grund zusätzlich die oben genannten Bedingungen berücksichtigt werden, um einen Lastabwurf sicher zu erkennen. Der Lastabwurf auf den Eigenbedarf des Turbosatzes in Abhängigkeit des dritten Signals ist für eine vorbestimmte vierte Zeitspanne zwischen 3 und 7 s gesetzt, insbesondere für 5 s.

Nachfolgend wird ein Ausführungsbeispiel der erfindungsgemäßen Lösung anhand der beigefügten schematischen Zeichnungen näher erläutert. Es zeigen:
- Fig. 1: ein Schaubild einer erfindungsgemäßen Vorrichtung zum Regeln eines Turbosatzes,
- Fig. 2: die Verläufe von diversen Kenngrößen eines Turbosatzes im Falle eines Doppelfehlers gemäß der erfindungsgemäßen Lösung,
- Fig. 3: ein Schaubild einer Vorrichtung zum Regeln eines Turbosatzes gemäß dem Stand der Technik, und
- Fig. 4: die Verläufe von diversen Kenngrößen eines Turbosatzes im Falle eines Doppelfehlers gemäß dem Stand der Technik.

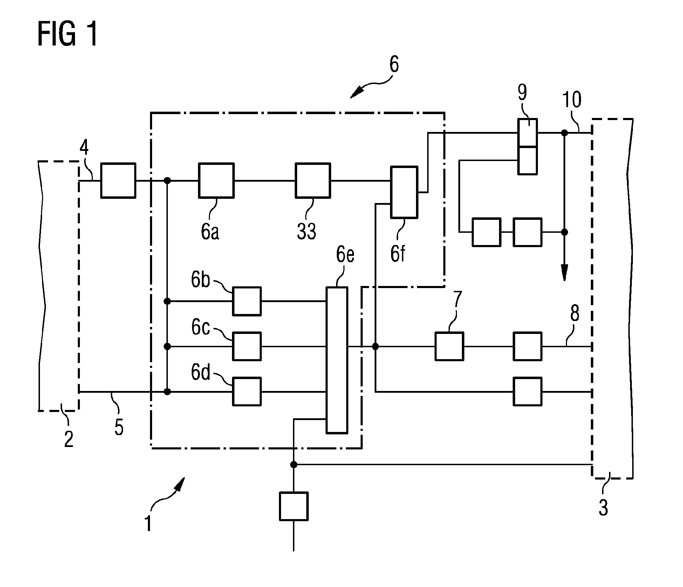

In Fig. 1 ist eine erfindungsgemäße Schaltungsanordnung bzw. Vorrichtung 1 zum Regeln eines weiter nicht dargestellten Turbosatzes mit einem Generator 2 und einer Turbine 3 veranschaulicht. Die Vorrichtung 1 umfasst als wesentliche Elemente eine PEL-Signalleitung 4 sowie eine PSW-Signalleitung 5, die von dem Generator 2 zu einem Mittel 6 zum Bereitstellen eines ersten Signals führen. Dieses Mittel 6 ist als Regeleinrichtung ausgestaltet, in den insgesamt sechs Schaltelementen 6a, 6b, 6c, 6d, 6e und 6f ausgebildet sind. Dabei wird über die PEL-Signalleitung 4 die Ist-Leistung PEL des Generators 2 an das Schaltelement 6a weitergegeben, welches überprüft, ob die Ist-Leistung PEL sprunghaft um einen vorbestimmten Wert GPLSP abgesunken ist. Dabei wird insbesondere eine sprungförmige Verminderung um größer als 70 % überprüft. Zur Überprüfung auf solche Leistungssprünge wird das Leistungssignal PEL zunächst durch ein DT1-Glied 33 gefiltert.

In dem Schaltelement 6b wird aus dem Eingangssignal PEL abgeleitet, ob die Ist-Leistung PEL des Generators 2 größer als ein bestimmter negativer Wert GPNEG ist. Vorliegend wird dabei insbesondere die Generatorleistung mit dem Wert GPNEG = -2 % verglichen. Es wird dadurch überprüft, ob sich der Generator 2 im Motorbetrieb mit Leistungen größer -2 % der Nennleistung befindet.

Im Schaltelement 6c wird überprüft, ob die Ist-Leistung PEL des Generators 2 kleiner als das Zweifache des Eigenbedarfs GP2EB geworden ist. Es wird so ein Absinken der Ist-Leistung PEL auf kleiner zweimal Eigenbedarf erkannt.

Mit dem Schaltelement 6d wird mittels der Eingangssignale "Ist-Leistung PEL" und "Soll-Leistung PSW" des Generators 2 die Differenz zwischen dem Leistungssollwert und dem Leistungsistwert ermittelt und mit dem Wert 2 x Eigenbedarf verglichen. Es wird so ein Absinken der Ist-Leistung detektiert.

Die Ergebnisse der Schaltelemente 6b, 6c und 6d sind über das Schaltelement 6e miteinander verknüpft, wobei dieses eine UND-Verknüpfung bildet.

Da ein Lastabwurfsignal durch die Schaltungsanordnung nur in Folge eines Leistungseinbruchs unterhalb des zweifachen Eigenbedarfs erkannt werden soll, wird erfindungsgemäß das Ergebnis dieser UND-Verknüpfung direkt an ein Mittel 7 zum Erzeugen eines dritten Signals LAW geleitet. Dadurch wird das dritte Signal LAW gebildet, wenn das erste Signal S1 länger als eine vorbestimmte dritte Zeitspanne TLAW, hier 0,3 s, besteht. Das Signal LAW wird dabei über eine LAW-Signalleitung 8 an die Turbine 3 geleitet, wo ein nicht dargestelltes Mittel zum dauerhaften Stoppen der Turbine in Abhängigkeit des LAW-Signals 8 vorgesehen ist.

Zur Erkennung einer Kurzschlussunterbrechung wird erfindungsgemäß ein gekoppeltes Signal verwendet. Dazu ist das Ergebnis der UND-Verknüpfung mittels des Schaltelements 6f mit dem Ergebnis des Schaltelements 6a verknüpft, wobei diese Verknüpfungen im Schaltelement 6f eine ODER-Verknüpfung ist. Auf diese Weise wird mit dem Mittel 6 zum Bereitstellen eines ersten Signals ein Signal S1 generiert, welches angibt, ob eine Verminderung der Ist-Leistung PEL des Generators 2 vorliegt.

Dieses Signal S1 wird einem Mittel 9 zum Erzeugen eines zweiten Signals KU zugeführt. Dieses Signal KU wird als ein Signal betrachtet, welches grundsätzlich eine Kurzschlussunterbrechung anzeigt und zwar in Abhängigkeit des ersten Signals S1. Das erzeugte zweite Signal KU wird nach einer vorbestimmten ersten Zeitspanne TKU von 150 ms zurückgesetzt und nachfolgend für eine vorbestimmte zweite Zeitspanne TSPKU von 7 s blockiert. Dies geschieht mit einem Mittel 7 zum Zurücksetzen und Blockieren des zweiten Signals KU, wobei dieses Mittel mit einem RS-Flipflop und einem zugehörigen Set-Signal gestaltet ist. Das Signal wird für die Zeitspanne von TSPKU gehalten und auf den Reset-Eingang des Flipflops gegeben. Diese Verschaltung bewirkt, dass das KU-Signal maximal 150 ms ansteht und danach erst nach frühestens 7 s wieder anstehen kann. Das KU-Signal wird über eine KU-Signalleitung 10 an die Turbine 3 weitergeleitet, wo ein nicht dargestelltes Mittel in Gestalt eines Reglers zum Stoppen und Starten der Turbine 3 vorgesehen ist. Dieser Regler bewirkt aufgrund des kurzzeitigen KU-Signals ein vorübergehendes Absenken des Leistungssollwertes PSW der Turbine 3.

In der erfindungsgemäßen Schaltungsanordnung bzw. Vorrichtung 1 zum Regeln des Turbosatzes ist das Stoppen der Turbine also mittels eines entkoppelten Signals nach einer sehr kurzen vorbestimmten dritten Zeitspanne TLAW realisiert, wohingegen eine Kurzschlussunterbrechung mit einem gekoppelten Signal aus der Lastsprungerkennung und dem Signal der UND-Verknüpfung erkannt und verarbeitet wird.

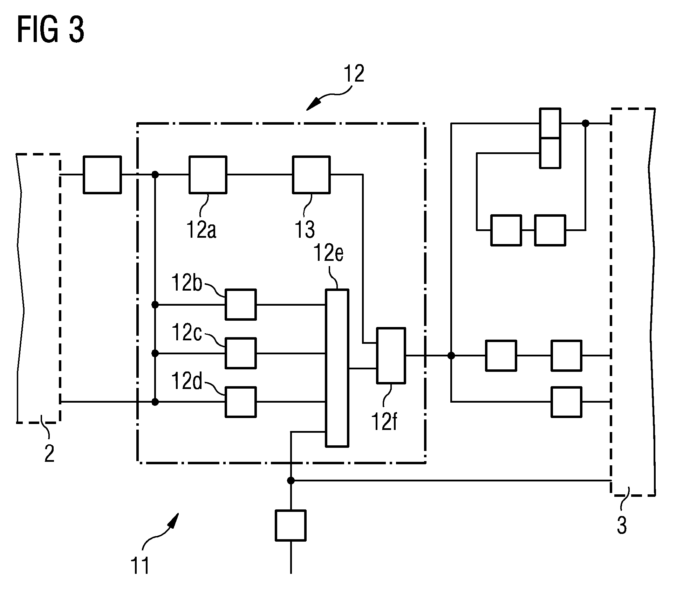

In Fig. 3 ist eine Schaltungsanordnung bzw. Vorrichtung 11 zum Regeln eines weiter nicht dargestellten Turbosatzes gemäß dem Stand der Technik mit einem Generator 2 und einer Turbine 3 veranschaulicht. Die Vorrichtung 11 umfasst ebenfalls eine PEL-Signalleitung sowie eine PSW-Signalleitung , die von dem Generator 2 zu einem Mittel 12 zum Bereitstellen eines ersten Signals führen. Dieses Mittel 12 ist als Regeleinrichtung ausgestaltet, in dem insgesamt sechs Schaltelemente 12a, 12b, 12c, 12d, 12e und 12f ausgebildet sind. Die Schaltelemente 12b, 12c und 12d sind über das Schaltelement 12e miteinander verknüpft, wobei dieses eine UND-Verknüpfung bildet. Das Schaltelement 12e ist mit dem Schaltelement 12a zu einer ODER-Verknüpfung verknüpft.

Aufgrund großer Zeitverzögerungen in einem DT1-Glied 13, welches zwischen dem Schaltelement 12a und der ODER-Verknüpfung 12f angeordnet ist, kann es, insbesondere bei kurzen TLAW-Zeitspannen, nach einer Kurzschlussunterbrechung zu einer ungewollten Lastabwurferkennung kommen. Bei einer derartigen Schaltung ist es also zwingend notwendig ausreichend lange TLAW-Zeitspannen vorzusehen. Ein schnelles Ansprechen der derart gestalteten Schaltlogik auf zwei kurz hintereinander folgende Netzstörfälle ist daher nicht möglich. Dies kann im ungünstigen Fall zur Schutzauslösung und daher zur Abschaltung des Turbosatzes führen.

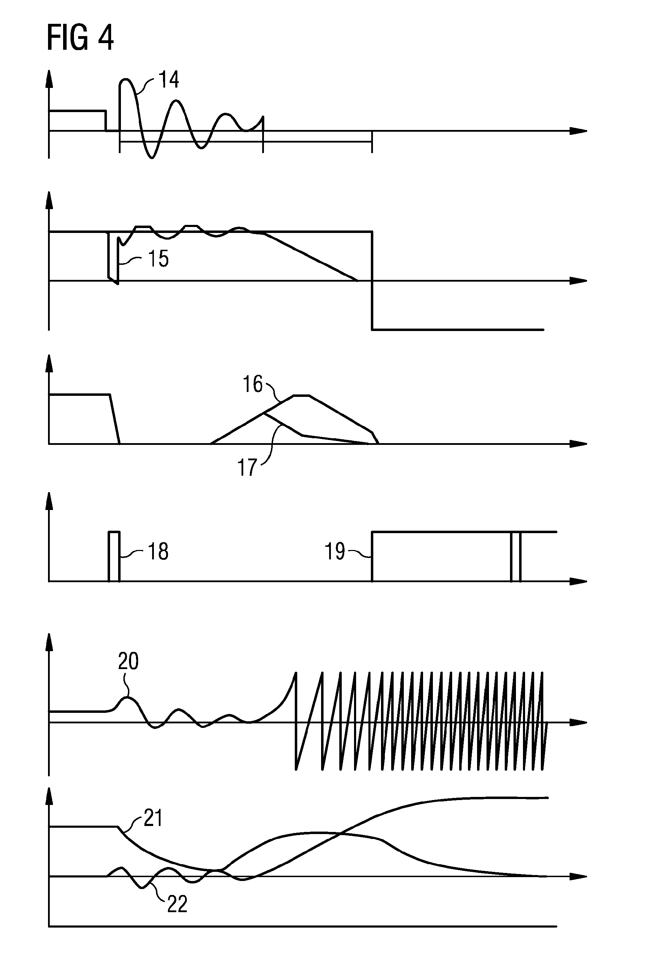

Fig. 4 zeigt die verschiedenen Verläufe von Signalen und Messwerte des Turbosatzes, der mit der bekannten Schaltungsanordnung bzw. Vorrichtung 11 gesteuert ist, über der Zeit aufgetragen. Dabei ist ein Verfahren zum Regeln des Turbosatzes gemäß dem Stand der Technik zugrunde gelegt. Eine erste Kennlinie 14 zeigt den Verlauf der Wirkleistung des Generators 2. Die Wirkleistung entspricht der Ist-Leistung PEL des Generators. Es ist zu erkennen wie die Wirkleistung nach einer Kurzschlussunterbrechung abfällt und nach der Fehlerklärung zwar zurückkommt, jedoch im weiteren Verlauf mehrfach durch den Nulldurchgang pendelt, bis eine zweite Kurzschlussunterbrechung stattfindet, in deren Folge es zu einer Lastabwurferkennung kommt. Zwischen dem Wiederansteigen der Wirkleistung und der zweiten Kurzschlussunterbrechung liegt eine Zeitspanne von TV = 2,6 s. Nach dem zweiten Fehler erfolgt der Lastabwurf nach einer Zeitspanne von TLAW = 2 s. Die Kennlinie 15 zeigt das Verhalten des zugehörigen Turbinenreglers, der die in Kennlinie 16 gezeigte Stellung der Mitteldruckventile des Turbosatzes und die zugehörigen Frischdampfventile, in Kennlinie 17 dargestellt, regelt. Die Kennlinie 18 zeigt ein Signal KU für eine Kurzunterbrechung. Nach der Zeitspanne TV + TLAW = 4,6 s zeigt Kennlinie 19 ein Lastabwurfsignal LAW. Die Kennlinie 18 entspricht dabei dem sich aus dem Stand der Technik ergebenden ersten Signal S1. Die Kennlinie 20 zeigt den zugehörigen Polradwinkel in °. Die Kennlinie 21 zeigt das mechanische Moment der Turbine. Es ist zu erkennen wie das Moment durch die plötzliche Verminderung der Ist-Leistung des Generators abfällt. Dabei pendelt die in Kennlinie 22 dargestellte Abweichung der Drehzahl einer zugehörigen Welle um den Nullpunkt. Mit der ansteigenden Stellung der Mitteldruckventile steigt auch das mechanische Moment der Turbine, bis es aufgrund des Lastabwurfsignals LAW erneut abfällt. Die Kennlinie 22 zeigt in diesem Bereich deutlich eine Überdrehzahl der Welle, die deutlich über 10% eines Normwerts liegt. Eine derart hohe Überdrehzahl kann zur Zerstörung des Turbosatzes führen.

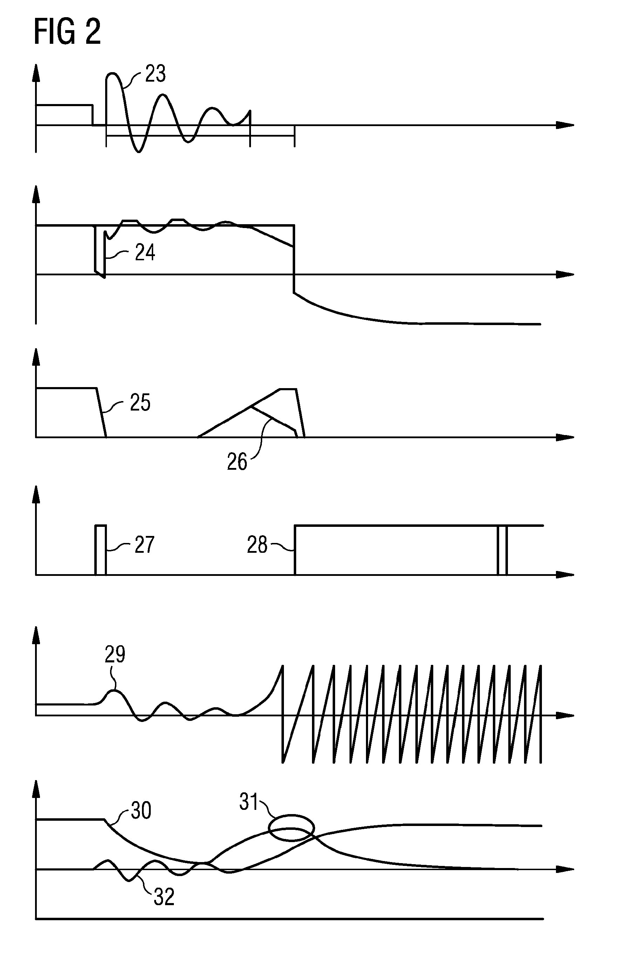

Fig. 2 zeigt die zum erfindungsgemäßen Verfahren gehörigen Kennlinien. Eine erste Kennlinie 23 zeigt die Wirkleistung des Generators bei einem Doppelfehler mit TV = 2,6 s und einer Zeitspanne von TLAW = 0,7 s. Die Kennlinie 24 zeigt das Verhalten des zugehörigen Turbinenreglers, der die in Kennlinie 25 gezeigte Stellung der Mitteldruckventile des Turbosatzes und die zugehörigen Frischdampfventile, in Kennlinie 26 dargestellt, regelt. In den Kennlinien 27 und 28 sind die Signale KU und LAW dargestellt. Die Kennlinie 29 zeigt den zugehörigen Polradwinkel in °. Die Kennlinie 30 zeigt das mechanische Moment der Turbine. Es ist zu erkennen wie das Moment durch die plötzliche Verminderung der Ist-Leistung des Generators abfällt. Mit der ansteigenden Stellung des Mitteldruckventils steigt auch das mechanische Moment der Turbine an. Da jedoch erfindungsgemäß die dritte Zeitspanne TLAW kurz gehalten werden kann, nämlich vorliegend 0,7 s, steigen der Mitteldruck und damit auch das mechanische Moment der Turbine nur kurz an. Dies ist deutlich zu erkennen im Bereich 31 der Kennlinie 30, der, im Gegensatz zu diesem Bereich bei dem

Verfahren nach dem Stand der Technik, keinen Plateaubereich mehr aufweist. Daher ergibt sich hier auch eine deutlich geringere Drehzahlabweichung der zugehörigen Welle, lediglich etwa 8 bis 9%. Die Drehzahlabweichung ist in der Kennlinie 32 dargestellt.

## Patentansprüche

1. Verfahren zum Regeln eines Turbosatzes mit einer Turbine (3) und einem Generator (2) mit den Schritten:
- Bereitstellen eines ersten Signals (S1), welches eine Verminderung der Ist-Leistung (PEL, 4) des Generators (2) anzeigt;
- Erzeugen eines zweiten Signals (KU, 10), welches eine Kurzschlussunterbrechung anzeigt, in Abhängigkeit des ersten Signals (S1);
- Zurücksetzten des zweiten Signals (KU, 10) nach einer vorbestimmten ersten Zeitspanne (TKU) und Blockieren des zweiten Signals (KU, 10) während einer vorbestimmten zweiten Zeitspanne (TSPKU);
- Bremsen und anschließendes Beschleunigen der Turbine(3) in Abhängigkeit des zweiten Signals (KU, 10);
- Erzeugen eines dritten Signals (LAW, 8), welches einen Lastabwurf des Turbosatzes anzeigt nach einer vorbestimmten dritten Zeitspanne (TLAW) in Abhängigkeit des ersten Signals (S1), wenn das erste Signal (S1) durch ein Absinken der Ist-Leistung (PEL, 4) des Generators (2) auf einen vorbestimmten negativen Wert (GPNEG) bereitgestellt wird sowie die Ist-Leistung (PEL, 4) des Generators (2) kleiner als das Zweifache des Eigenbedarfs (GP2EB) geworden ist sowie die Differenz zwischen einer Soll-Leistung (PSW, 5) und der Ist-Leistung (PEL, 4) des Generators (2) größer als das Zweifache des Eigenbedarfs (GP2EB) des Turbosatzes geworden ist; sowie
- Lastabwurf auf den Eigenbedarf des Turbosatzes in Abhängigkeit des dritten Signals (LAW, 8).

2. Verfahren gemäß Anspruch 1,
wobei die vorbestimmte erste Zeitspanne (TKU) zwischen 100 ms und 200 ms, insbesondere 150 ms beträgt.

3. Verfahren gemäß Anspruch 1 oder 2,
wobei die vorbestimmte zweite Zeitspanne (TSPKU) zwischen 4 s und 10 s, insbesondere 7 s beträgt.

4. Verfahren gemäß einem der Ansprüche 1 bis 3,
wobei die vorbestimmte dritte Zeitspanne (TLAW) zwischen 0,1 s und 0,7 s, insbesondere 0,3 s beträgt.

5. Verfahren gemäß einem der Ansprüche 1 bis 4,
wobei das Erzeugen des dritten Signals (LAW, 8), welches einen Lastabwurf anzeigt, in Abhängigkeit eines Lastschalters für den Generator (2) erfolgt (GLSE).

6. Verfahren gemäß einem der Ansprüche 1 bis 5,
wobei der Lastabwurf auf den Eigenbedarf des Turbosatzes in Abhängigkeit des dritten Signals (LAW, 8) für eine vorbestimmte vierte Zeitspanne zwischen 3 s und 7 s, insbesondere 5 s gesetzt ist.

7. Vorrichtung zum Regeln eines Turbosatzes (1) mit einer Turbine (3) und einem Generator (2), mit:
- einem Mittel zum Bereitstellen eines ersten Signals (S1), welches eine Verminderung der Ist-Leistung (PEL, 4) des Generators (2) anzeigt;
- einem Mittel zum Erzeugen eines zweiten Signals (KU, 10), welches eine Kurzschlussunterbrechung anzeigt, in Abhängigkeit des ersten Signals (S1), wenn das erste Signal (S1) durch eine sprunghafte Verminderung der Ist-Leistung (PEL, 4) des Generators (2) um einen vorbestimmten Wert (GPLSP) bereitgestellt ist;
- einem Mittel zum Zurücksetzten des zweiten Signals (KU, 10) nach einer vorbestimmten ersten Zeitspanne (TKU) und Blockieren des zweiten Signals (KU, 10) während einer vorbestimmten zweiten Zeitspanne (TSPKU);
- einem Mittel zum Bremsen und anschließenden Beschleunigen der Turbine in Abhängigkeit des zweiten Signals (KU, 10);
- einem Mittel zum Erzeugen eines dritten Signals (LAW, 8), welches einen Lastabwurf anzeigt nach einer vorbestimmten dritten Zeitspanne (TLAW) in Abhängigkeit des ersten Signals (S1), wenn das erste Signal (S1) durch ein Absinken der Ist-Leistung (PEL, 4) des Generators (2) auf einen vorbestimmten negativen Wert (GPNEG) bereitgestellt wird sowie die Ist-Leistung (PEL, 4) des Generators kleiner als das Zweifache des Eigenbedarfs (GP2EB) des Turbosatzes geworden ist sowie die Differenz zwischen einer Soll-Leistung (PSW, 5) und der Ist-Leistung (PEL, 4) des Generators (2) größer als das Zweifache des Eigenbedarfs (GP2EB) geworden ist; sowie
- einem Mittel zum Bewerkstelligen des Lastabwurfs auf den Eigenbedarf des Turbosatzes in Abhängigkeit des dritten Signals (LAW, 8) .
